# EUROPÄISCHE PATENTSCHRIFT

(11) **EP 1 661 772 B1**
(45) Veröffentlichungstag und Bekanntmachung des Hinweises auf die Patenterteilung: **07.02.2007**
(21) Anmeldenummer: 04028261.8
(22) Anmeldetag: 29.11.2004
(51) Int. Cl.: B60R 21/20

(54) **Luftsackmodul für einen Fahrzeugsitz**
Airbag module for a vehicle seat
Module de sac gonflable pour un siège de vehicule

(43) Veröffentlichungstag der Anmeldung: 31.05.2006
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE); Tessarek, Artur, 44797 Bochum (DE); Kreher, Andre, 42289 Wuppertal (DE)
(74) Vertreter: Manitz, Finsterwald & Partner GbR

(56) Entgegenhaltungen:
- DE-A1- 10 253 472
- DE-A1- 10 307 480
- DE-U1- 29 601 257
- US-A- 5 730 463
- PATENT ABSTRACTS OF JAPAN Bd. 1997, Nr. 07, 31. Juli 1997 (1997-07-31) -& JP 09 071213 A (TOYOTA MOTOR CORP; NHK SPRING CO LTD), 18. März 1997 (1997-03-18)

## Beschreibung

Die Erfindung betrifft ein Luftsackmodul für einen Fahrzeugsitz sowie einen Fahrzeugsitz mit einem solchen Luftsackmodul.

Ein Luftsackmodul bzw. Fahrzeugsitz der eingangs genannten Art ist grundsätzlich bekannt und dient dazu, einen Fahrzeuginsassen beispielsweise bei einem Seitenaufprall zu schützen. Als problematisch erweist sich bei dem bekannten Luftsackmodul bzw. Fahrzeugsitz, dass der sich aufblasende Luftsack zunächst das Polstermaterial des Fahrzeugsitzes durchdringen muss, um sich nach seinem Austritt aus dem Fahrzeugsitz frei entfalten zu können. Dies behindert zum einen eine schnelle Expansion des Luftsacks und kann zum anderen dazu führen, dass sich der Luftsack in einer unerwünschten Richtung ausbreitet.

In der US-A-5 730 463 ist ein Luftsackmodul gemäß dem Oberbegriff des Anspruchs 1 offenbart. Ein ähnliches Luftsackmodul ist auch aus der DE-A-103 07 480 bekannt.

Der Erfindung liegt die Aufgabe zugrunde, ein Luftsackmodul bzw. einen Fahrzeugsitz mit einem Luftsackmodul zu schaffen, das bzw. der eine möglichst schnelle und kontrollierte Expansion des Luftsacks ermöglicht.

Zur Lösung der Aufgabe ist ein Luftsackmodul mit den Merkmalen des Anspruchs 1 bzw. ein Fahrzeugsitz mit den Merkmalen des Anspruchs 7 vorgesehen.

Das erfindungsgemäße Luftsackmodul umfasst einen zusammengefalteten Luftsack und ein Verdrängerteil, welches im Falle einer Auslösung des Luftsackmoduls durch den sich aufblasenden Luftsack beaufschlagbar ist, um Polstermaterial des Fahrzeugsitzes zur Bildung eines in Sollausbreitungsrichtung des Luftsackes weisenden Schusskanals für den Luftsack zu verdrängen. Das Verdrängerteil ist durch den sich aufblasenden Luftsack als Ganzes in Sollausbreitungsrichtung bewegbar.

Erfindungsgemäß ist das Luftsackmodul also mit einem Verdrängerteil versehen, welches bei Auslösung des Luftsackmoduls in seiner Gesamtheit durch das Polstermaterial getrieben wird, um für den sich aufblasenden Luftsack einen Weg, nämlich den Schusskanal, durch das Polstermaterial freizumachen.

Durch diese gezielte Bildung des Schusskanals wird zum einen erreicht, dass sich der aufblasende Luftsack definiert in einer vorgegebenen Richtung, nämlich in der Sollausbreitungsrichtung entfaltet und somit in einem genau vorbestimmten Bereich des Fahrzeugs zum Einsatz kommt.

Zum anderen bewirkt die Bildung des Schusskanals durch das Verdrängerteil, dass der sich aufblasende Luftsack auf kürzestem Wege die Oberfläche des Fahrzeugsitzes erreicht und dadurch besonders schnell aus dem Fahrzeugsitz austreten und expandieren kann.

Aufgrund des Verdrängerteils muss der Luftsack ferner ein Minimum an Energie aufwenden, um das Polstermaterial zu verdrängen. Die beim Aufblasen des Luftsacks freigesetzte Energie wird folglich in optimaler Weise zur Entfaltung des Luftsacks genutzt.

Die Expansion des Luftsacks erfolgt erfindungsgemäß somit nicht nur besonders schnell, sondern auch kontrolliert und in der gewünschten Richtung. Im Ergebnis wird der Fahrzeuginsassenschutz dadurch erheblich erhöht.

Besonders vorteilhaft ist außerdem, dass erfindungsgemäß das Polstermaterial überwiegend verdrängt und eine Beschädigung des Polstermaterials weitgehend minimiert wird. Die Separierung von Polstermaterial wird dadurch vermieden, insbesondere wird das Polstermaterial nicht wesentlich zerstört, z.B. in Stücke gerissen.

Der erhöhte Insassenschutz wird außerdem bei einem Maximum an Sitzkomfort erreicht, da das Luftsackmodul wegen des Verdrängerteils von Polstermaterial in einer derartigen Stärke umgeben sein kann, dass das Luftsackmodul bei einer normalen Benutzung des Fahrzeugsitzes durch einen Fahrzeuginsassen nicht spürbar ist.

Gemäß einer vorteilhaften Ausbildung der Erfindung ist das Polstermaterial mit einer Komponente senkrecht zur Sollausbreitungsrichtung verdrängbar. Das Polstermaterial wird durch den expandierenden Luftsack folglich nicht in Sollausbreitungsrichtung aus dem Fahrzeugsitz herausgerissen, sondern es wird zur Bildung des Schusskanals durch das Verdrängerteil zur Seite geschoben. Durch das Verdrängerteil wird mit anderen Worten eine Beschädigung des Polstermaterials verhindert, so dass der ursprüngliche Zustand des Fahrzeugsitzes nach einer Auslösung des Luftsackmoduls mit geringem wirtschaftlichem Aufwand wiederherstellbar ist.

Vorteilhafterweise sitzt das Verdrängerteil an der in Sollausbreitungsrichtung weisenden Seite des Luftsackmoduls zumindest bereichsweise kappenartig auf dem Luftsack auf. Das kappenartige Aufsitzen des Verdrängerteils verhindert, dass sich der entfaltende Luftsack vor seinem Austritt aus dem Fahrzeugsitz an dem Verdrängerteil vorbei bewegen kann. Dadurch ist sichergestellt, dass das Verdrängerteil im Wesentlichen mit der gesamten zur Verfügung stehenden Kraft des expandierenden Luftsacks beaufschlagt wird. Die für die Ausbreitung des Luftsacks bereitgestellte Energie wird somit in optimaler Weise zur Verdrängung des Polstermaterials genutzt, was eine besonders schnelle Entfaltung des Luftsacks ermöglicht.

Besonders bevorzugt ist es, wenn das Verdrängerteil zumindest bereichsweise keilförmig ausgebildet ist. Auf diese Weise wird das Verdrängerteil bei Auslösung des Luftsackmoduls wie ein Keil durch das Polstermaterial getrieben. Dadurch wird das Polstermaterial besonders effizient beiseite geschoben. Der Schusskanal wird somit unter optimaler Ausnutzung der durch den expandierenden Luftsack ausgeübten Kraft freigemacht, so dass sich der Luftsack noch schneller ausbreiten kann.

Des weiteren ist es vorteilhaft, wenn das Verdrängerteil wenigstens einen sich in Sollausbreitungsrichtung verjüngenden und insbesondere spitz zulaufenden Vorsprung aufweist, welcher insbesondere dornähnlich oder als Schneidkante ausgebildet ist.

Eine derartige Ausbildung des Verdrängerteils bewirkt zum einen eine noch bessere Verdrängung des Polstermaterials, wodurch die Bewegung des Verdrängerteils durch das Polstermaterial noch weiter erleichtert und eine noch schnellere Bildung des Schusskanals erreicht wird. Zum anderen bewirkt der spitz zulaufende Vorsprung einen besonders frühzeitigen Kontakt des Verdrängerteils mit dem Sitzbezug des Fahrzeugsitzes und insbesondere mit einer in dem Sitzbezug vorgesehenen Reißnaht.

Das Verdrängerteil bildet somit nicht nur einen Schusskanal in dem Polstermaterial, sondern es dient auch zum frühzeitigen und effizienten Durchstechen des Sitzbezuges bzw. Öffnen der Reißnaht. Dadurch kann der Luftsack noch schneller aus dem Fahrzeugsitz austreten und sich noch wirkungsvoller entfalten.

Der Vorsprung des Verdrängerteils kann als Schneidkante ausgebildet sein, die sich beispielsweise über die gesamte Abmessung des Luftsacks in zur Sollausbreitungsrichtung senkrechter Richtung erstreckt. Durch eine solche Schneidkante kann der Sitzbezug gleichzeitig über die gesamte Höhe des Luftsacks aufgetrennt werden. Die Austrittsöffnung für den Luftsack wird also vollständig durch das Verdrängerteil erzeugt.

Prinzipiell ist es jedoch ausreichend, wenn eine im Sitzbezug vorgesehene Reißnaht durch das Verdrängerteil zunächst nur an einer Stelle durchtrennt wird, da die Reißnaht ausgehend von dieser einen Stelle leicht über ihre gesamte Länge aufreißt. Zur schnellen Öffnung der Reißnaht ist es daher ausreichend, wenn der Vorsprung des Verdrängerteils dornähnlich ausgebildet ist.

Vorteilhafterweise ist das Verdrängerteil durch eine Fangeinrichtung mit dem Luftsackmodul fest verbunden, welche insbesondere einen flexiblen und bevorzugt dehnbaren Materialstreifen umfasst. Der Materialstreifen kann beispielsweise an dem Luftsack angenäht oder auf sonstige Weise an dem Luftsack bzw. dem Luftsackmodul verankert sein. Durch die Fangeinrichtung wird verhindert, dass sich das Verdrängerteil nach Austritt aus dem Fahrzeugsitz unkontrolliert durch einen Fahrzeuginnenraum bewegt. Die Sicherheit der Fahrzeuginsassen ist dadurch noch weiter erhöht.

Gemäß einer weiteren, nicht beanspruchten Variante des Luftsackmoduls weist das Verdrängerteil zwei bereichsweise durch den Luftsack verformbare Wandabschnitte eines den Luftsack zumindest teilweise umgebenden Gehäuses auf.

Das Verdrängerteil wird in diesem Fall also nicht wie das Verdrängerteil der erfindungsgemäßen Ausführungsform vor dem sich aufblasenden Luftsack her durch das Polstermaterial getrieben, sondern es wird durch zwei Wandabschnitte eines Luftsackmodulgehäuses gebildet. Die Wandabschnitte sind verformbar, so dass sie z.B. durch den sich aufblasenden Luftsack aufgebogen und zur Seite gedrückt werden können, um dadurch in Sollausbreitungsrichtung befindliches Polstermaterial wegzudrücken. Zur Bildung des Schusskanals werden die Wandabschnitte also flügeltürartig durch den expandierenden Luftsack aufgebogen.

Auch diese Bildung des Schusskanals ermöglicht eine schnelle und energiesparende Entfaltung des Luftsacks. Eine Reißnaht des Sitzbezuges wird bei dieser Variante des Verdrängerteils nicht unmittelbar durch eine Einwirkung des Verdrängerteils geöffnet, sondern indirekt durch die Verdrängung des Polstermaterials. So wird das Polstermaterial durch das flügeltürartige Aufbiegen der Wandabschnitte derart zur Seite geschoben, dass Kraftkomponenten, die quer zur Sollausbreitungsrichtung in dem Polstermaterial wirken, durch das Polstermaterial auch auf die Reißnaht übertragen werden und diese dadurch aufreißt.

In Sollausbreitungsrichtung weisende Endbereiche der Wandabschnitte können, insbesondere unter Spannung, aneinander anliegen und durch den sich aufblasenden Luftsack auseinander bewegbar sein. Dadurch wird das flügeltürartige Aufbiegen der Wandabschnitte noch weiter begünstigt.

Das Vorsehen zweier verformbarer Wandabschnitte ist allerdings nicht zwingend, sondern es kann genügen, wenn lediglich ein Abschnitt eines Luftsackgehäuses durch den sich aufblasenden Luftsack verformbar ist.

Weiterer Gegenstand der Erfindung ist ein Fahrzeugsitz mit einem erfindungsgemäßen Luftsackmodul. Das Luftsackmodul kann insbesondere in einem seitlichen Polsterabschnitt des Fahrzeugsitzes angeordnet sein. Man spricht in diesem Fall auch von einem sogenannten "Seitenairbag". Dadurch, dass der erfindungsgemäße Fahrzeugsitz mit dem erfindungsgemäßen Luftsackmodul ausgerüstet ist, werden die voranstehend genannten Vorteile entsprechend erreicht.

Gemäß einer bevorzugten Ausführungsform des Fahrzeugsitzes ist das Luftsackmodul in einer Aussparung des Sitzpolsters untergebracht, welche an die äußere Form des Luftsackmoduls angepasst ist. Die Aussparung weist somit eine minimale Größe auf, die zur Unterbringung des Luftsackmoduls in dem Fahrzeugsitz erforderlich ist. Dadurch wird zum einen ein sicherer Sitz des Luftsackmoduls in dem Fahrzeugsitz erreicht. Zum anderen ist die Stärke des Polstermaterials nur so weit reduziert, wie es zur Unterbringung des Luftsackmoduls unbedingt erforderlich ist. Auf diese Weise ist der Komfort des Fahrzeugsitzes durch die Unterbringung des Luftsackmoduls nicht wesentlich eingeschränkt.

Ein das Luftsackmodul umgebendes Polstermaterial des Fahrzeugsitzes kann eine Sollbruchstelle oder einen Schlitz aufweisen, die bzw. der sich etwa in Sollausbreitungsrichtung und im Wesentlichen von dem Luftsackmodul ausgehend bis zu einer Reißnaht eines Sitzbezugs des Fahrzeugs erstreckt. Die Sollbruchstelle bzw. der Schlitz erleichtert die Verdrängung des Polstermaterials, so dass sich der Luftsack noch schneller und noch energiesparender entfalten kann.

Vorteilhafterweise ist eine Führung für ein insbesondere kappenartiges Verdrängerteil des Luftsackmoduls vorgesehen, durch welche beim Aufblasen des Luftsacks eine Bewegung des Verdrängerteils in Sollausbreitungsrichtung zumindest zeitweise vorgegeben ist. Durch die Führung wird sichergestellt, dass sich das Verdrängerteil bei Beaufschlagung durch den Luftsack in Sollausbreitungsrichtung bewegt und somit auch der Schusskanal in dieser Richtung ausgebildet wird. Dies trägt im Ergebnis dazu bei, dass die Entfaltung des Luftsacks noch kontrollierter erfolgt.

Die Führung kann beispielsweise eine Trägerplatte des Fahrzeugsitzes umfassen, an welcher das Luftsackmodul derart befestigt ist, dass ein Abschnitt des Verdrängerteils zwischen der Trägerplatte und dem Luftsack und in Sollausbreitungsrichtung bewegbar gelagert ist. Die Trägerplatte ist in diesem Fall ein integraler Teil des Fahrzeugsitzes und kann beispielsweise mit einem Gestell des Fahrzeugsitzes verschraubt oder verschweißt sein.

Alternativ ist es aber auch möglich, dass die Trägerplatte einen Teil des Luftsackmoduls, beispielsweise eines Luftsackmodulgehäuses, bildet.

Nachfolgend wird die Erfindung rein beispielhaft anhand einer vorteilhaften Ausführungsform unter Bezugnahme auf die Zeichnung beschrieben. Es zeigen:
- Fig. 1: eine Ausführungsform des erfindungsgemäßen Luftsackmoduls in einem Fahrzeugsitz;
- Fig. 2: eine Fangeinrichtung des Luftsackmoduls von Fig. 1;
- Fig. 3: das Luftsackmodul von Fig. 1 mit einem sich aufblasenden Luftsack;
- Fig. 4: das Luftsackmodul von Fig. 1 mit aus dem Fahrzeugsitz ausgetretenem Luftsack;
- Fig. 5: eine weitere, nicht beanspruchte Variante eines Luftsackmoduls in einem Fahrzeugsitz;
- Fig. 6: das Luftsackmodul von Fig. 5 mit einem sich aufblasenden Luftsack; und
- Fig. 7: das Luftsackmodul von Fig. 5 mit aus dem Fahrzeugsitz ausgetretenem Luftsack.

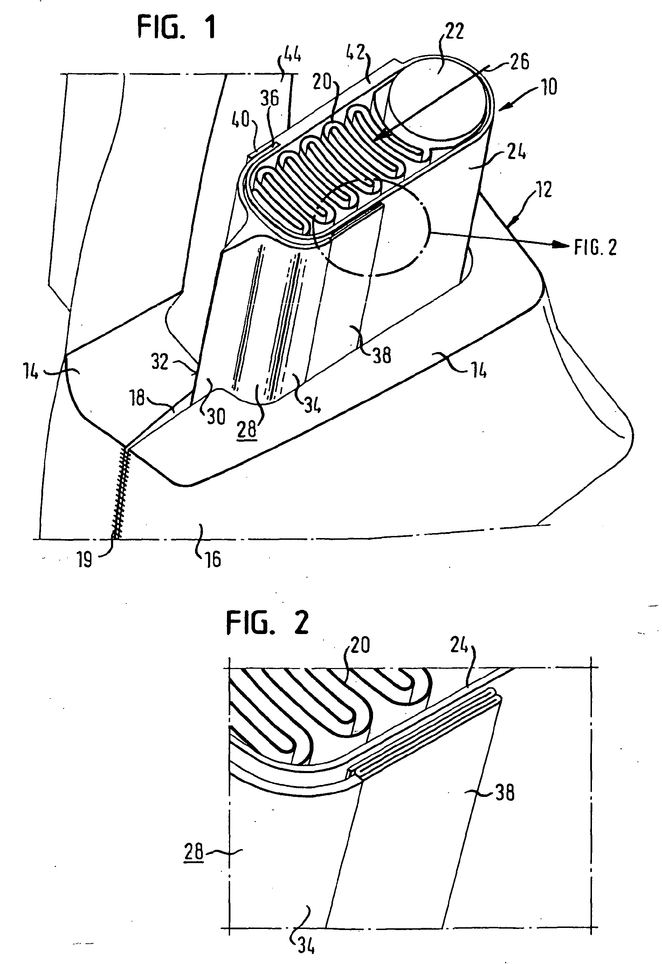

In Fig. 1 ist eine Ausführungsform des erfindungsgemäßen Luftsackmoduls 10 dargestellt, welches in einem seitlichen Sitzpolsterabschnitt 12 eines Fahrzeugs angeordnet ist.

Der Sitzpolsterabschnitt 12 weist ein das Luftsackmodul 10 zumindest bereichsweise umgebendes Polstermaterial 14 auf, welches an seiner Außenseite von einem Sitzbezug 16 des Fahrzeugsitzes umgeben ist. In dem Polstermaterial 14 ist eine Aussparung für das Luftsackmodul 10 vorgesehen, wobei die Form dieser Aussparung im Wesentlichen an die äußere Form des Luftsackmoduls 10 angepasst ist.

In dem Polstermaterial 14 ist außerdem eine schlitzförmige Unterbrechung 18 vorgesehen, die sich ausgehend von dem Luftsackmodul 10 bis zu einer Reißnaht 19 erstreckt, die sich in dem Sitzbezug 16 befindet. Die Reißnaht 19 ist an derjenigen Stelle des Sitzpolsterabschnitts 12 angeordnet, an welcher ein Luftsack 20 bei Auslösung des Luftsackmoduls 10 austreten soll.

Das Luftsackmodul 10 umfasst den Luftsack 20 und einen Gasgenerator 22 zum Aufblasen des Luftsacks. Der Luftsack 20 und der Gasgenerator 22 sind von einer Hülle 24 umgeben, die durch einen Teilabschnitt des Luftsacks 20 selbst gebildet sein kann. Um eine Ausbreitung des Luftsacks 20 zu ermöglichen, ist die Hülle 24 mit geeigneten Sollbruchstellen versehen.

Der aufblasbare Abschnitt des Luftsacks 20 ist innerhalb der Hülle 24 zusammengefaltet. Im dargestellten Ausführungsbeispiel handelt es sich bei der Faltung um eine Z-Faltung. Die Faltung kann aber auch z.B. eine Stülpfaltung sein. Bevorzugt ist, dass die Faltung des Luftsacks 20 so gestaltet ist, dass der Luftsack 20 bei seiner Expansion einen Schub in einer Sollausbreitungsrichtung des Luftsacks 20 entwickelt, die in Fig. 1 durch den Pfeil 26 dargestellt ist und die nachfolgend als "nach vorne" bezeichnet wird.

Das Luftsackmodul 10 umfasst ferner ein kappenartiges Verdrängerteil 28, welches an der Vorderseite des Luftsackmoduls 10 auf den zusammengefalteten Luftsack 20 aufgesetzt ist.

Das Verdrängerteil 28 weist einen nach vorne weisenden Vorsprung 30 auf, der sich in Sollausbreitungsrichtung 26 verjüngt. Die Vorderseite des Vorsprungs 30 ist als Schneidkante 32 ausgebildet, die sich im Wesentlichen über die gesamte Höhe des Luftsackmoduls 10 erstreckt. Wie in Fig. 1 zu erkennen ist, greift der Vorsprung 30 bereits im nicht ausgelösten Zustand, d.h. im Normalzustand des Luftsackmoduls 10, in die schlitzartige Unterbrechung 18 des Polstermaterials 14 ein.

Das Verdrängerteil 28 umfasst ferner zwei nach hinten weisende Seitenabschnitte 34, 36, die das Luftsackmodul 10 zumindest bereichsweise seitlich umgreifen.

Der eine Seitenabschnitt 34 ist mittels einer Fangeinrichtung an dem Luftsackmodul 10 verankert. Die Fangeinrichtung umfasst einen flexiblen und dehnbaren Materialstreifen 38, dessen eines Ende an dem Seitenabschnitt 34 des Verdrängerteils 28 angebracht und dessen anderes Ende an der Hülle 24 des Luftsackmoduls 10 angenäht ist. Im Ausgangszustand des Luftsackmoduls 10 ist der Materialstreifen 38 Z-artig zusammengefaltet, wie es in Fig. 2 dargestellt ist.

Der andere Seitenabschnitt 36 des Verdrängerteils 28 ist im Normalzustand des Luftsackmoduls 10 in einer Führung geführt. Die Führung ist im Wesentlichen durch eine sich in Sollausbreitungsrichtung 26 erstreckende Längsaussparung 39 gebildet, die auf ihrer einen Seite durch die Hülle 24 und auf ihrer anderen Seite durch einen Abschnitt 40 einer Trägerplatte 42 begrenzt ist. Die Trägerplatte 42 ist an einem Gestell 44 des Fahrzeugsitzes angebracht und dient zur Halterung des Luftsackmoduls 10 in dem Fahrzeugsitz.

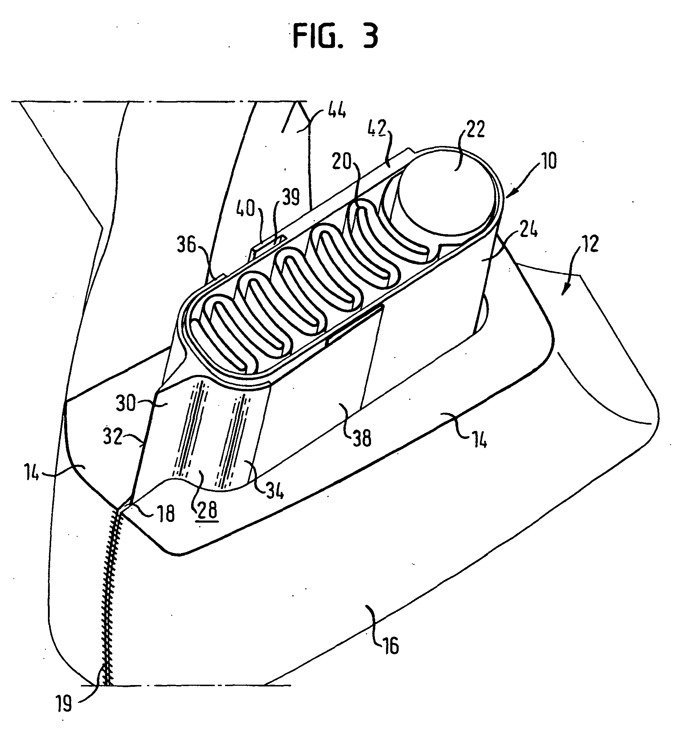

Bei Auslösung des Luftsackmoduls 10 wird der Luftsack 20 durch den Gasgenerator 22 derart aufgeblasen, dass er sich in Sollausbreitungsrichtung 26 entfaltet. Dabei beaufschlagt der expandierende Luftsack 20 das Verdrängerteil 28 derart, dass dieses - zumindest anfangs in der Längsaussparung 39 geführt - in Sollausbreitungsrichtung 26 durch das Polstermaterial 14 getrieben wird, wie es in Fig. 3 dargestellt ist.

Zur Führung des Verdrängerteils 28 trägt dabei nicht nur die mit dem Seitenabschnitt 36 des Verdrängerteils 28 zusammenwirkende Trägerplatte 42 bei, sondern auch die schlitzförmige Unterbrechung 18 des Polstermaterials 14, entlang der sich der Vorsprung 30 des Verdrängerteils 28 bei der Ausbreitung des Luftsacks 20 bewegt.

Aufgrund der Keilform des Verdrängerteils 28 wird das zwischen Luftsackmodul 10 und Sitzbezug 16 befindliche Polstermaterial 14 bei der Bewegung des Verdrängerteils 28 in Sollausbreitungsrichtung 26 zur Seite gedrückt und ein Schusskanal für den Luftsack 20 gebildet.

Sobald die Schneidkante 32 des Verdrängerteils 28 auf die Reißnaht 19 trifft, reißt diese auf. Ein Kontakt des Verdrängerteils 28 mit der Reißnaht 19 bereits in einem Punkt reicht aus, um ein Aufreißen der Reißnaht 19 über ihre gesamte Länge zu initiieren. Das gleiche Ergebnis wird erreicht, wenn die Schneidkante 32 nicht nur punktuell, sondern im Wesentlichen über ihre gesamte Länge auf die Reißnaht 19 einwirkt.

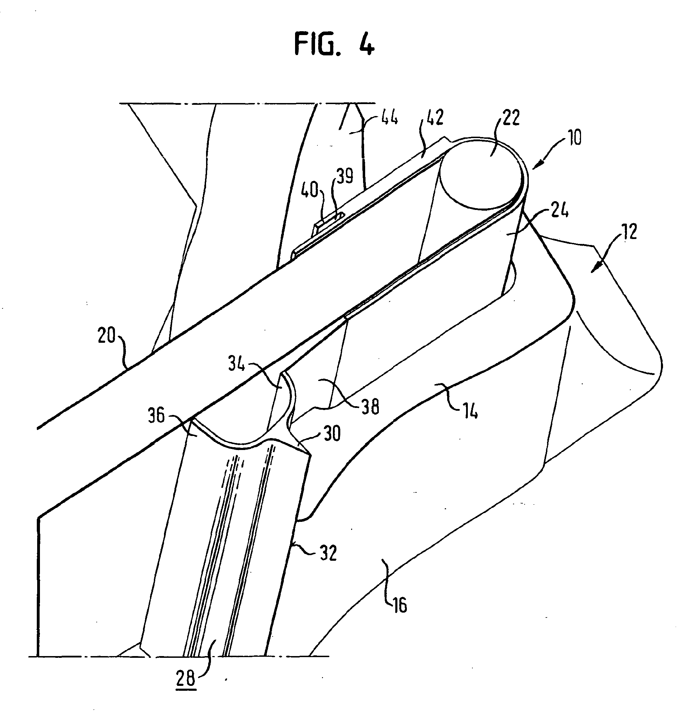

Fig. 4 zeigt das Luftsackmodul 10 im vollständig expandierten Zustand. Zu erkennen ist, wie sich der aufgeblasene Luftsack 20 entlang des Schusskanals in Sollausbreitungsrichtung 26 erstreckt und das an den Schusskanal angrenzende Polstermaterial 14 beiseite gedrückt ist.

Bei der Bewegung des Verdrängerteils 28 in Sollausbreitungsrichtung 26 entfaltet sich der Materialstreifen 38 der Fangeinrichtung. Wie in Fig. 4 dargestellt ist, klappt das Verdrängerteil 28 nach seinem Austritt aus dem Fahrzeugsitz zur Seite weg, um Platz für den sich ausbreitenden Luftsack 20 zu schaffen. Da das Verdrängerteil 28 über die Fangeinrichtung, d.h. durch den an die Hülle 24 angenähten Materialstreifen 38, an dem Luftsackmodul 10 verankert ist, kann das Verdrängerteil 38 nach seinem Austritt aus dem Fahrzeugsitz nicht unkontrolliert in den Fahrzeuginnenraum gelangen.

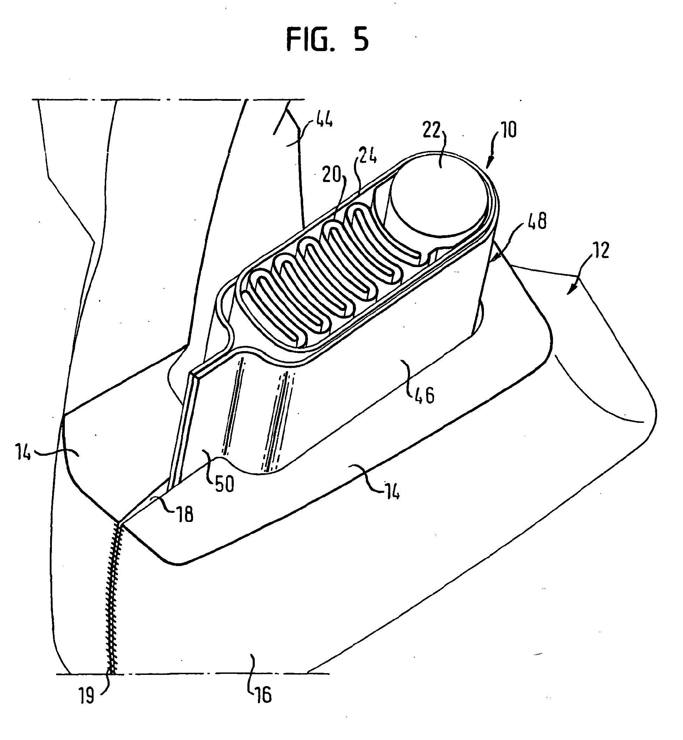

In Fig. 5 ist eine weitere Variante eines in einem Fahrzeugsitz untergebrachten Luftsackmoduls 10 dargestellt.

Die äußere Form dieses Luftsackmoduls 10 sowie die entsprechend daran angepasste Gestalt des das Luftsackmodul 10 umgebenden Polstermaterials 14 gleicht im Wesentlichen dem der voranstehend beschriebenen erfindungsgemäßen Ausführungsform. Auch zur Anordnung des Gasgenerators 22 und des Z-förmig gefalteten Luftsacks 20 wird auf die erfindungsgemäße Ausführungsform verwiesen.

Das Luftsackmodul 10 gemäß der in Fig. 5 gezeigten Variante unterscheidet sich von dem voranstehend beschriebenen Luftsackmodul 10 im Wesentlichen in der Ausbildung und Wirkung des Verdrängerteils.

So ist das Verdrängerteil gemäß der in Fig. 5 gezeigten Variante durch verformbare Wandabschnitte 46 eines den Luftsack 20 zumindest teilweise umgebenden Gehäuses 48 gebildet. Wie Fig. 5 zeigt, sind die Wandabschnitte 46 im vorderen Bereich des Luftsackmoduls 10 jeweils mehrfach, genauer gesagt zweifach, und zwar gegenläufig umgebogen, so dass die Endbereiche 50 der Wandabschnitte 46 aneinander anliegen und sich in Sollausbreitungsrichtung 26 erstrecken. Die Endbereiche 50 bilden zusammen also einen Vorsprung des Gehäuses 48 an der Vorderseite des Luftsackmoduls 10, welcher - ähnlich wie der Vorsprung 30 des Verdrängerteils 28 der ersten Ausführungsform - in die schlitzförmige Unterbrechung 18 des Polstermaterials 14 eingreift.

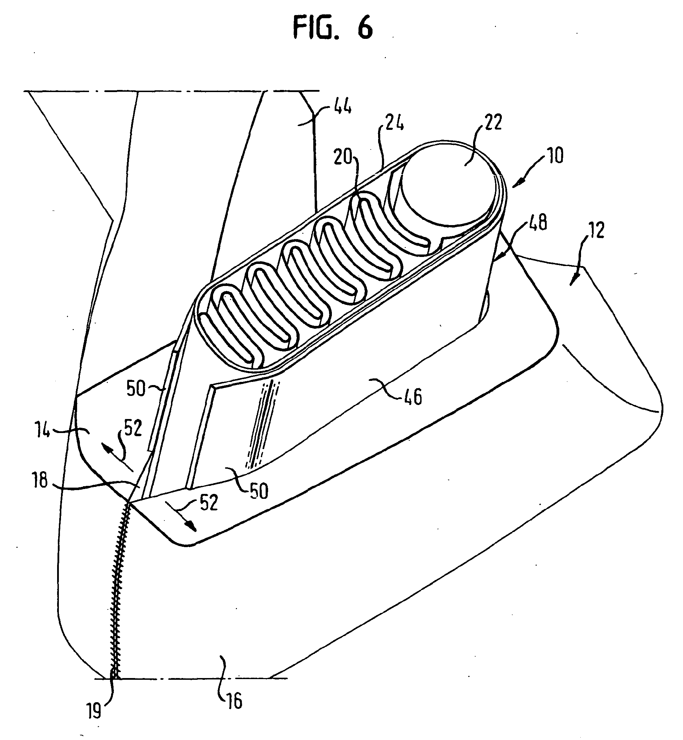

Wie in Fig. 6 dargestellt ist, lassen sich die Endbereiche 50 aufgrund der Verformbarkeit der Wandabschnitte 46 bei Auslösung des Luftsackmoduls 10 durch den sich aufblasenden Luftsack 20 auseinander drücken. Dabei wirkt der expandierende Luftsack 20 derart auf die Wandabschnitte 46 ein, dass diese flügeltürartig aufgebogen werden.

Aufgrund des Eingreifens der Endbereiche 50 der Wandabschnitte 46 in die schlitzförmige Unterbrechung 18 des Polstermaterials 14, wird das zwischen dem Luftsackmodul 10 und dem Sitzbezug 16 befindliche Polstermaterial 14 beim Umbiegen der Wandabschnitte 46 zur Seite gedrückt, wodurch ein sich in Sollausbreitungsrichtung 26 erstreckender Schusskanal für den Luftsack 20 gebildet wird.

Durch das Beiseitedrücken des Polstermaterials 14 treten in dem Polstermaterial 14 quer zur Sollausbreitungsrichtung 26 wirkende Kraftkomponenten 52 auf. Diese Kraftkomponenten 52 sorgen ihrerseits für eine Spannung der Reißnaht 19, durch welche die Reißnaht 19 aufgerissen wird. Zum Öffnen der Reißnaht 19 wirken die Wandabschnitte 46 also - anders als das Verdrängerteil 28 der erfindungsgemäßen Ausführungsform - nicht direkt auf die Reißnaht 19 ein, sondern lediglich indirekt durch die Erzeugung von Querkräften in dem Polstermaterial 14.

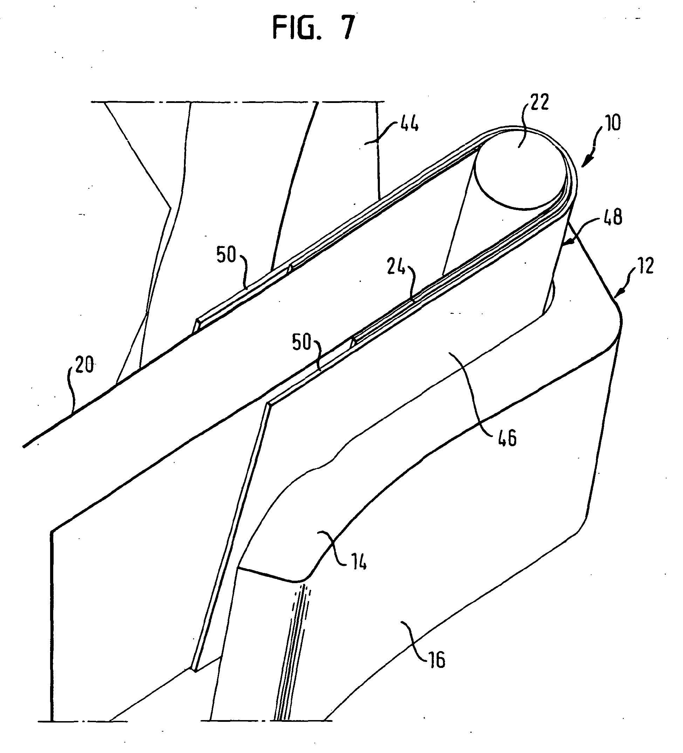

Fig. 7 zeigt das Luftsackmodul 10 mit vollständig aufgeblasenem Luftsack 20. Zu erkennen ist, dass die Wandabschnitte 46 im Ergebnis so umgebogen werden, dass sie im Wesentlichen gerade und parallel zum aufgeblasenen Luftsack 20 verlaufen. Außerdem ist zu erkennen, wie das Polstermaterial 14 im Bereich der Austrittsöffnung für den Luftsack 20 durch die Wandabschnitte 46 zur Seite gedrückt wird.

Sowohl bei dem erfindungsgemäßen Luftsackmodul 10 als auch bei der in den Fig. 5 bis 7 gezeigten Luftsackmodulvariante werden durch die Verdrängung des Polstermaterials 14 und die Öffnung der Reißnaht 19 ein Schusskanal und eine Austrittsöffnung für den Luftsack 20 gebildet, welche eine kontrollierte und reproduzierbare Entfaltung bzw. Expansion des Luftsacks 20 in Sollausbreitungsrichtung 26 gewährleisten. Dabei kann der sich aufblasende Luftsack 20 auf dem kürzesten Wege aus dem Fahrzeugsitz austreten.

Aufgrund des Verdrängerteils 28 bzw. der Wandabschnitte 46 muss der Luftsack 20 ferner ein Minimum an Energie aufwenden, um das Polstermaterial 14 zu verdrängen. Die durch den Gasgenerator 22 freigesetzte Energie wird folglich in optimaler Weise zur Entfaltung des Luftsacks 20 genutzt. Der Luftsack 20 kann sich dadurch nicht nur kontrolliert, sondern auch besonders schnell ausbreiten, wodurch die Fahrzeugsicherheit erheblich erhöht ist.

Die erhöhte Fahrzeugsicherheit kann außerdem bei einem Maximum an Sitzkomfort erreicht werden, da das Luftsackmodul 10 aufgrund des Verdrängerteils 28 von Polstermaterial 14 mit einer derartigen Stärke im Fahrzeugsitz umgeben sein kann, dass das Luftsackmodul 10 bei einer normalen Benutzung des Fahrzeugsitzes durch einen Fahrzeuginsassen nicht spürbar ist.

### Bezugszeichenliste

- 10: Luftsackmodul
- 12: Sitzpolsterabschnitt
- 14: Polstermaterial
- 16: Sitzbezug
- 18: schlitzförmige Unterbrechung
- 19: Reißnaht
- 20: Luftsack
- 22: Gasgenerator
- 24: Hülle
- 26: Sollausbreitungsrichtung
- 28: Verdrängerteil
- 30: Vorsprung
- 32: Schneidkante
- 34: Seitenabschnitt
- 36: Seitenabschnitt
- 38: Materialstreifen
- 39: Längsaussparung
- 40: Abschnitt
- 42: Trägerplatte
- 44: Gestell
- 46: Wandabschnitt
- 48: Gehäuse
- 50: Endbereich
- 52: Kraftkomponente

## Patentansprüche

1. Luftsackmodul (10) für einen Fahrzeugsitz mit einem zusammengefalteten Luftsack (20) und einem Verdrängerteil (28), welches im Falle einer Auslösung des Luftsackmoduls (10) durch den sich aufblasenden Luftsack (20) beaufschlagbar ist, um Polstermaterial (14) des Fahrzeugsitzes zur Bildung eines in Sollausbreitungsrichtung (26) des Luftsacks (20) weisenden Schusskanals für den Luftsack (20) zu verdrängen,
**dadurch gekennzeichnet,**
**dass** das Verdrängerteil (28) durch den sich aufblasenden Luftsack (20) als Ganzes in Sollausbreitungsrichtung (26) bewegbar ist.

2. Luftsackmodul (10) nach Anspruch 1,
**dadurch gekennzeichnet,**
**dass** das Polstermaterial (14) mit einer Komponente senkrecht zur Sollausbreitungsrichtung (26) verdrängbar ist.

3. Luftsackmodul (10) nach einem der vorherigen Ansprüche,
**dadurch gekennzeichnet,**
**dass** das Verdrängerteil (28) an der in Sollausbreitungsrichtung (26) weisenden Seite des Luftsackmoduls (10) zumindest bereichsweise kappenartig auf dem Luftsack (20) aufsitzt.

4. Luftsackmodul (10) nach einem der vorherigen Ansprüche,
**dadurch gekennzeichnet,**
**dass** das Verdrängerteil (28) zumindest bereichsweise keilförmig ausgebildet ist.

5. Luftsackmodul (10) nach einem der vorherigen Ansprüche,
**dadurch gekennzeichnet,**
**dass** das Verdrängerteil (28) wenigstens einen sich in Sollausbreitungsrichtung (26) verjüngenden und insbesondere spitz zulaufenden Vorsprung (30) aufweist, welcher insbesondere dornähnlich oder als Schneidkante (32) ausgebildet ist.

6. Luftsackmodul (10) nach einem der vorherigen Ansprüche,
**dadurch gekennzeichnet,**
**dass** das Verdrängerteil (28) durch eine Fangeinrichtung (38) mit dem Luftsackmodul (10) fest verbunden ist, welche insbesondere einen flexiblen und bevorzugt dehnbaren Materialstreifen (38) umfasst.

7. Fahrzeugsitz mit einem Luftsackmodul (10) nach einem der vorherigen Ansprüche,
welches insbesondere in einem seitlichen Polsterabschnitt (12) des Fahrzeugsitzes angeordnet ist.

8. Fahrzeugsitz nach Anspruch 7,
**dadurch gekennzeichnet,**
**dass** das Luftsackmodul (10) in einer Aussparung eines Sitzpolsterabschnitts (12) untergebracht ist, welche an die äußere Form des Luftsackmoduls (10) angepasst ist.

9. Fahrzeugsitz nach Anspruch 7 oder 8,
**dadurch gekennzeichnet,**
**dass** ein das Luftsackmodul (10) umgebendes Polstermaterial (14) des Fahrzeugsitzes eine Sollbruchstelle oder einen Schlitz (19) aufweist, die bzw. der sich etwa in Sollausbreitungsrichtung (26) und im Wesentlichen von dem Luftsackmodul (10) ausgehend bis zu einer Reißnaht (18) eines Sitzbezugs (16) des Fahrzeugs erstreckt.

10. Fahrzeugsitz nach einem der Ansprüche 7 bis 9,
**dadurch gekennzeichnet,**
**dass** eine Führung für ein insbesondere kappenartiges Verdrängerteil (28) des Luftsackmoduls (10) vorgesehen ist, durch welche beim Aufblasen des Luftsacks (20) eine Bewegung des Verdrängerteils (28) in Sollausbreitungsrichtung (26) zumindest zeitweise vorgegeben ist.

11. Fahrzeugsitz nach Anspruch 10,
**dadurch gekennzeichnet,**
**dass** die Führung eine Trägerplatte (42) des Fahrzeugsitzes umfasst, an welcher das Luftsackmodul (10) derart befestigt ist, dass ein Abschnitt (36) des Verdrängerteils (28) zwischen der Trägerplatte (42) und dem Luftsack (20) und in Sollausbreitungsrichtung (26) bewegbar gelagert ist.

## Claims

1. An airbag module (10) for a vehicle seat comprising a folded airbag (20) and a displacement part (28; 46), which, in the event of a triggering of the airbag module (10), can be acted on by the inflating airbag (20) in order to displace cushion material (14) of the vehicle seat to form a firing passage for the airbag (20) facing in the desired expansion direction (26) of the airbag (20),
**characterized in that** the displacement part (28) can be moved as a whole in the desired expansion direction (26) by the inflating airbag (20).

2. An airbag module (10) in accordance with claim 1, **characterized in that** the cushion material (14) can be displaced by a component perpendicular to the desired expansion direction (26).

3. An airbag module (10) in accordance with any one of the preceding claims, **characterized in that** the displacement part (28) is seated at least regionally on the airbag (20) like a cap at the side of the airbag module (10) facing the desired expansion direction (26).

4. An airbag module (10) in accordance with any one of the preceding claims, **characterized in that** the displacement part (28) is made at least regionally in wedge shape.

5. An airbag module (10) in accordance with any one of the preceding claims, **characterized in that** the displacement part (28) has at least one projection (30) which tapers in the desired expansion direction (26), in particular converges to a point and is in particular made similar to a spike or as a cutting edge (32).

6. An airbag module (10) in accordance with any one of the preceding claims, **characterized in that** the displacement part (28) is fixedly connected to the airbag module (10) by a capturing device (38) which in particular comprises a flexible, and preferably stretchable, material strip (38).

7. A vehicle seat comprising an airbag module (10) in accordance with any one of the preceding claims which is in particular arranged in a side cushion section (12) of the vehicle seat.

8. A vehicle seat in accordance with claim 7, **characterized in that** the airbag module (10) is accommodated in a cut-out of a seat cushion section (12) which is matched to the outer shape of the airbag module (10).

9. A vehicle seat in accordance with claim 7 or claim 8, **characterized in that** a cushion material (14) of the vehicle seat surrounding the airbag module (10) has a desired breaking point or a slot (19) which extends approximately in the desired direction of expansion (26) and, substantially starting from the airbag module (10), up to a tear seam (18) of a seat cover (16) of the vehicle.

10. A vehicle seat in accordance with any one of the claims 7 to 9,
**characterized in that** a guide for a displacement part (28), in particular a cap-like displacement part, of the airbag module (10) is provided by which a movement of the displacement part (28) in the desired expansion direction (26) is pre-determined at least at times on the inflation of the airbag (20).

11. A vehicle seat in accordance with claim 10, **characterized in that** the guide includes a support plate (42) of the vehicle seat to which the airbag module (10) is secured such that a section (36) of the displacement part (28) is movably supported between the support plate (42) and the airbag (20) and in the desired expansion direction (26).

## Revendications

1. Module de sac gonflable (10) pour un siège de véhicule, possédant un sac gonflable replié (20) et une partie de déplacement (28), qui en cas de déclenchement du module de sac gonflable (10) est sollicitée par le sac gonflable se gonflant, pour déplacer un matériau de rembourrage (14) du siège de véhicule pour former un canal de propagation pour le sac gonflable (20), le canal s'étendant dans une direction de déploiement de consigne (26) du sac gonflable (20),
**caractérisé en ce que**,
la partie de déplacement (28) est mobile dans son ensemble dans la direction de déploiement de consigne (26) grâce au sac gonflable se gonflant (20).

2. Module de sac gonflable (10) selon la revendication 1, **caractérisé en ce que**, le matériau de rembourrage (14) est déplaçable avec une composante perpendiculaire à la direction de déploiement de consigne (26).

3. Module de sac gonflable (10) selon l'une quelconque des revendications précédentes, **caractérisé en ce que**, du côté du module de sac gonflable (10) orienté dans la direction de déploiement la partie de déplacement (28) de consigne (26) est en appui sur le sac gonflable au moins en partie (20) à la manière d'une chape.

4. Module de sac gonflable (10) selon l'une quelconque des revendications précédentes, **caractérisé en ce que**,
la partie de déplacement (28) est formée au moins en partie en forme de coin.

5. Module de sac gonflable (10) selon l'une quelconque des revendications précédentes, **caractérisé en ce que**,
la partie de déplacement (28) présente au moins une saillie (30) s'étendant en particulier en pointe et s'amincissant dans la direction de déploiement de consigne (26), qui est formée en particulier semblable à une pointe ou comme une arête de coupe (32).

6. Module de sac gonflable (10) selon l'une quelconque des revendications précédentes, **caractérisé en ce que**,
la partie de déplacement (28) est reliée fermement par un dispositif d'absorption (38) avec le module de sac gonflable (10), qui comprend en particulier une bande de matériau flexible et de préférence extensible (38).

7. Siège de véhicule avec un module de sac gonflable (10) selon l'une quelconque des revendications précédentes, qui est agencé en particulier dans une découpe latérale de rembourrage (12) du siège de véhicule.

8. Siège de véhicule selon la revendication 7, **caractérisé en ce que**,
le module de sac gonflable (10) est agencé dans un évidement d'une partie de rembourrage de siège (12), qui est adaptée à la forme extérieure du module de sac gonflable (10).

9. Siège de véhicule selon la revendication 7 ou 8, **caractérisé en ce que**,
un matériau de rembourrage (14) entourant le module de sac gonflable (10) du siège de véhicule présente une zone de rupture ou une rainure (19), qui s'étend approximativement dans la direction de déploiement de consigne (26) et sensiblement à partir du module de sac gonflable (10) jusqu'à une couture déchirable (18) d'une housse de siège (16) du véhicule.

10. Siège de véhicule selon les revendications 7 à 9, **caractérisé en ce que**,
un guide pour une partie de déplacement (28) en particulier en forme de chape du module de sac gonflable (10) est prévu, grâce auquel par gonflage du sac gonflable (20) un déplacement de la partie de déplacement (28) est appliqué au moins temporairement dans la direction de déploiement de consigne (26).

11. Siège de véhicule selon la revendication 10, **caractérisé en ce que**,
le guidage comprend une plaque de support (42) du siège de véhicule, à laquelle le module de sac gonflable (10) est fixé de telle façon qu'une partie (36) de la partie de déplacement (28) est positionnée entre la plaque de support (42) et le sac gonflable (20) et dans la direction de déploiement de consigne (26).
